Europäisches Patentamt

European Patent Office

Office européen des brevets

(19)

(11) **EP 1 674 538 A1**

(12) **EUROPEAN PATENT APPLICATION**

(43) Date of publication:
  **28.06.2006 Bulletin 2006/26**

(51) Int Cl.:
  *C09D 11/00* $^{(2006.01)}$

(21) Application number: **05110852.0**

(22) Date of filing: **17.11.2005**

(84) Designated Contracting States:
  **AT BE BG CH CY CZ DE DK EE ES FI FR GB GR HU IE IS IT LI LT LU LV MC NL PL PT RO SE SI SK TR**
  Designated Extension States:
  **AL BA HR MK YU**

(30) Priority: **21.12.2004 EP 04106784**
  **03.02.2005 EP 05100741**

(71) Applicant: **AGFA-GEVAERT**
  **2640 Mortsel (BE)**

(72) Inventors:
  • **Deroover, Geert**
  **2640, Mortsel (BE)**
  • **De Voeght, Frank**
  **2640, Mortsel (BE)**
  • **Gilleir, Jan**
  **2640, Mortsel (BE)**

(54) **Ink-jet set**

(57)   A method for preparing an ink-jet ink set comprising the steps of:

(a) preparing a first colour ink by mixing a polymeric dispersant and a pigment having a maximum absorbance $A_{max}$ between 400 and 500 nm and an absorbance $A_{ref}$ at a reference wavelength of 600 nm;
(b) preparing a second colour ink by mixing a polymeric dispersant and a pigment having a maximum absorbance $A_{max}$ between 500 and 600 nm and an absorbance $A_{ref}$ at a reference wavelength of 650 nm;
(c) preparing a third colour ink by mixing a polymeric dispersant and a pigment having a maximum absorbance $A_{max}$ between 600 and 700 nm and an absorbance $A_{ref}$ at a reference wavelength of 830 nm;

characterized in that each colour ink is milled until a spectral separation factor SSF larger than 70 with SSF = $A_{max}$ / $A_{ref}$ is measured.
  An ink-jet ink set obtainable by the above method is also disclosed.

EP 1 674 538 A1

**Description**

Technical field

The present invention relates to ink-jet ink sets exhibiting a large colour gamut and a high light- and ozone-fastness and methods for preparing them.

Background art

In ink-jet printing tiny drops of ink fluid are projected directly onto an ink-receiver surface without physical contact between the printing device and the ink-receiver. The printing device stores the printing data electronically and controls a mechanism for ejecting the ink drops image-wise onto the ink-receiver. Printing can be accomplished by moving a print head across the ink-receiver or vice versa. Early patents on ink-jet printers include US 3739393 (MEAD CORP) , US 3805273 (MEAD CORP) and US 3891121 (MEAD CORP) .

The jetting of the ink droplets can be performed in several different ways. In a first type of process called continuous ink-jet printing, the ink stream jetted from an orifice of the print head is broken up, by applying a pressure wave pattern to this orifice, into ink droplets of uniform size and spacing, which can be electrostatically charged or not as desired. In one embodiment the charged drops are deflected by an electric field into a gutter for recuperation, while the uncharged drops are undeflected and land on the ink-receiver to form an image. In an alternative embodiment it is the charged droplets which land on the ink-receiver to form an image and it are the uncharged droplets, which are recuperated.

According to a second process the ink droplets can be created by a "drop on demand" method (DOD). A drop-on-demand device ejects ink droplets only when they are needed for imaging on the ink-receiver, thereby avoiding the complexity of drop charging, deflection hardware, and ink collection. In drop-on-demand ink-jet printing, the ink droplet can be formed by means of a pressure wave created by a mechanical motion of a piezoelectric transducer (so-called "piezo method"), or by means of discrete thermal pushes (so-called "bubble jet" method, or "thermal jet" method).

It will be readily understood that the optimal composition of the ink is dependent on the ink jetting method used and on the nature of the ink-receiver to be printed.

The ink compositions can be roughly divided into:

- water based, the drying mechanism involving absorbance, penetration and evaporation;
- oil based, the drying involving absorbance and penetration;
- solvent based, the drying mechanism involving penetration but primarily evaporation;
- hot melt or phase change, in which the ink is liquid at the ejection temperature but solid at room temperature and wherein drying is replaced by solidification;
- UV-curable, in which drying is replaced by polymerization.

In many applications of ink-jet printing the final product at the disposal of the end-user is a printed colour image. Colour gamut is an important feature of colour ink-jet printing, since it is a measure of the range of colours that can be produced using a given combination of colorants. It is desirable for the colour gamut to be as large as possible. The colour gamut is controlled primarily by the absorbance characteristics of the set of colorants used to produce the image. Subtractive imaging systems typically employ three or more colorants, typically including at least cyan (C), magenta (M), and yellow(Y). It is also common for such systems to include an achromatic (neutral density) colorant such as black (K). The colorants in the ink-jet inks can be dyes or pigments.

Ink-jet inks based on dyes exhibit a much larger colour gamut than pigment inks. However, colour images printed with dye based ink-jet inks tend to show poor light-fastness and ozone fastness. Light-fastness is a measure of how colours fade in a printed image when that image is exposed to light, while ozone fastness is a measure of how colours fade in a printed image exposed to an atmosphere rich of ozone. US 6712449 (HEWLETT-PACKARD) discloses a method for optimizing colour gamut and light-fastness by blending high- and low-chroma dye based inks. It was observed that light-fastness and colour gamut tend to relate inversely, in that the better the light fastness, the worse the colour gamut and vice versa. High chroma-inks produce images with high gamut values but low light fastness, while low chroma-inks have increased light fastness. The use of high- and low-chroma dye based inks leads to a complex system for colour management and reproduction.

In **US 6682589** (HEWLETT-PACKARD) , specific dyes are selected for composing an ink-jet ink set with a high colour gamut and an improved light fastness. The improvement is observed when exposed to office light, but remains insufficient when exposed to the sun or other strong UV radiation sources.

Although many other patents (e.g. **US 6706102** (KODAK) , **US 6673140** (HEWLETT-PACKARD), **US 6780912** (HEWLETT PACKARD) ,...) describe how fading by light and/or gas (e.g. ozone) of colour ink-jet images produced by dye based inks can be reduced, the stability obtainable by using pigment ink-jet inks has not been reached.

On the other hand, pigment ink-jet inks show a much smaller colour gamut than dye based inks. Many patents disclose ways to improve the colour gamut of pigment ink-jet inks.

One method for improving the colour gamut of pigmented ink-jet inks is disclosed by **US 6152999** (KODAK) , wherein additional pigmented ink-jet inks are used containing an orange, a green and a violet pigment. A similar ink set is also disclosed in **US 6530986** (ILFORD) .

Sometimes a multi-density ink-jet ink set is used to improve the colour reproduction by decreasing the graininess, adding only a limited increase of colour gamut. A multi-density ink-jet ink set uses combinations of ink-jet inks with about the same hue but different chroma and lightness. These ink-jet inks are made by using the same colorants at different concentrations or using different colorants with about the same hue.

An example of such a multi-density ink-jet ink set is given by **US 6670409** (SEIKO EPSON) , which discloses an ink-jet recording ink set comprising light colour inks of a plurality of colours, each of the light colour inks having at least a pigment, water and a fine polymer particle; and dark colour inks of a plurality of colours, each of the dark colour inks having at least a pigment and water, wherein each of the dark colour inks either does not contain a fine polymer particle or contains a fine polymer particle in smaller quantity than any of said light colour inks.

The increase of the number of pigmented inks in all the ink-jet ink sets, disclosed by **US 6152999** (KODAK) , **US 6530986** (ILFORD) and **US 6670409** (SEIKO EPSON) , lead to a more complex system for colour management and reproduction.

Colour gamut is often thought to be maximized by the use of so-called "block dyes". It has been suggested that the optimum gamut could be obtained with a subtractive three-colour system using three theoretical block dyes where the blocks are separated at approximately 490nm and 580nm. This proposal is interesting but cannot be implemented for various reasons. In particular, there are no real colorants corresponding to the proposed block dyes. Nevertheless, attempts are made by selecting and blending pigments in **US 5738716** (KODAK) and **US 5679141** (KODAK) in order to approach the absorbance of "block dyes".

**US 5738716** (KODAK) discloses an ink-jet ink set for colour printing comprising a magenta pigment, a yellow pigment, and a cyan pigment wherein the normalized spectral transmission density distribution curve of the cyan pigment has a density between 0.66 and 0.94 at 600nm and a density between 0.83 and 1.0 at 610nm, and the magenta pigment has a density between 0.25 and 0.93 at 520nm, a density between 0.9 and 1.0 at 540nm, and a density between 0.9 and 1.0 at 560nm.

**US 5679141** (KODAK) discloses an ink-jet pigment set comprising a magenta pigment, a yellow pigment, and a cyan pigment wherein the normalized spectral transmission density distribution curve of the magenta pigment has a density between 0.25 and 0.93 at 520 nm, a density between 0.9 and 1.0 at 540 nm, and a density between 0.9 and 1.0 at 560 nm.

Also dye based inks and pigmented inks have been used in combination in order to obtain images with the colour gamut of a dye-based ink and the light-fastness of a pigmented ink. **US 6705702** (KODAK) discloses a method of ink-jet printing, comprising:

> providing a pigmented supply of a pigmented ink having a colour;
> providing a dye-based supply of a dye-based ink having the colour; and
> printing a region of a medium with the colour by depositing drops from the pigmented supply and drops from the dye-based supply on different subregions of the region. The increase of the number of inks in the ink set again leads to a more complex system for colour management and reproduction.

Improvements in colour gamut have also been realized in **US 5679138** (KODAK), **US 6719452** (DU PONT) and **WO 02074866** (DU PONT) by controlling the milling conditions. The colour gamut can be improved by aiming at pigmented inks with a small particle size and narrow size distributions. However, an average particle diameter less than 100 nm, preferably even less than 50 nm as disclosed by **US 6786959** (RICOH) , leads to problems of particle reagglomeration and low light-fastness. Polymeric dispersants are commonly added to retard particle reagglomeration. Small particles have a much larger specific surface area and hence require the addition of very large amounts of polymeric dispersants to obtain stable dispersed pigment particles. Beside the difficulty in realizing good colloidal stability, problems in jetting the ink may arise due to an increased viscosity of the ink.

**US 5679138** (KODAK) discloses a process for making ink-jet inks, comprising the steps of:

> (A) providing an organic pigment dispersion containing a pigment, a carrier for the pigment and a dispersant;
> (B) mixing the pigment dispersion with rigid milling media having an average particle size less than 100 $\mu$m;
> (C) introducing the mixture of step (B) into a high speed mill;
> (D) milling the mixture from step (C) until a pigment particle size distribution is obtained wherein 90% by weight of the pigment particles have a size less than 100 nanometers (nm);

(E) separating the milling media from the mixture milled in step (D); and

(F) diluting the mixture from step (E) to obtain an ink-jet ink having a pigment concentration suitable for ink-jet printers.

A spectrophotometer is used in **US 6719452** (DU PONT) and **WO 02074866** (DU PONT) to control the milling conditions, so that more reliable inks are obtained exhibiting approximately the same properties, e.g. of colour gamut and dispersion stability.

**US 6719452** (DU PONT) discloses a process for making a transparent tint which comprises

(a) charging the components of a transparent tint, said components comprising a clear polymeric binder for the tint, solvent for the tint, and colorant in a mixing vessel;

(b) blending the components to form a liquid tint composition;

(c) shading the tint during its manufacture by passing the liquid tint through a controlled pathlength transmittance cell coupled to a spectrophotometer;

(d) measuring the spectral transmittance of the liquid tint over the visible spectrum;

(e) calculating the colour values of the wet tint being manufactured from the light transmittance measurements;

(f) comparing the colour values of the wet tint being manufactured to the colour values of the standard wet tint and calculating the difference between the values of the tint being manufactured and the standard tint and calculating the quantity of colorants to be added to the tint to bring the tint within specified colour and strength tolerance values;

(g) adding to the tint being manufactured the quantities of components calculated in step (f);

(h) repeating steps (b)-(f) at least once in the event the tint is not within the specified colour and strength tolerance until the tint being manufactured is within said tolerance.

**WO 02074866** (DU PONT) discloses a process for making single pigmented dispersions which comprises:

(a) charging the components of a single pigment liquid dispersion into a mixing vessel;

(b) grinding the components together to form a liquid dispersion;

(c) passing the liquid dispersion through a transmittance cell coupled to a spectrophotometer;

(d) measuring the spectral transmittance of the wet dispersion over the visible spectrum ;

(e) calculating the optical density of the dispersion at two specific wavelengths from the transmittance measurements and comparing the ratio of optical density values at the two specific wavelengths to that of a known standard dispersion to determine achievement of the desired particle size and thus the desired testing strength;

(f) repeating steps (b)- (e) at least once in the event the dispersion is not within the desired particle size tolerance until the dispersion being manufactured is within said desired particle size tolerance.

Many improvements have been made for improving the colour, but most of them render the printing process or manufacturing process more difficult often in a trade-off with other properties, e.g. light fastness.

Therefore, it would be highly desirable to have an ink-jet ink set producing colour images exhibiting high colour gamut and light-fastness in a printing process with a simple system for colour management and reproduction.

Objects of the Invention

It is an object of the present invention to provide an ink-jet ink set capable of producing colour images exhibiting high colour gamut, light-fastness and ozone-fastness

It is a further object of the present invention to provide an ink-jet ink set suitable for a printing process with a simple system for colour management and reproduction.

Further objects of the invention will become apparent from the description hereinafter.

Summary of the Invention

It has been surprisingly found that for obtaining images exhibiting a large colour gamut, that it is not necessary to make an ink-jet ink set consisting of inks with very small pigment particles which are difficult to stabilize, to use extra inks in the ink set causing a more difficult system for colour reproduction, or to combine the inks in some manner with dyes and simultaneously reduce light-fastness of the printed images.

Objects of the present invention have been realized with a method for preparing an ink-jet ink set comprising the steps of:

(a) preparing a first colour ink by mixing a polymeric dispersant and a pigment having a maximum absorbance $A_{max}$ between 400 and 500 nm and an absorbance $A_{ref}$ at a reference wavelength of 600 nm;

(b) preparing a second colour ink by mixing a polymeric dispersant and a pigment having a maximum absorbance $A_{max}$ between 500 and 600 nm and an absorbance $A_{ref}$ at a reference wavelength of 650 nm;

(c) preparing a third colour ink by mixing a polymeric dispersant and a pigment having a maximum absorbance $A_{max}$ between 600 and 700 nm and an absorbance $A_{ref}$ at a reference wavelength of 830 nm; characterized in that each colour ink is milled until a spectral separation factor SSF larger than 70 with SSF = $A_{max}$ / $A_{ref}$ is measured.

Objects of the present invention have also been realized by an ink-jet ink set obtainable by the above method.

Further advantages and embodiments of the present invention will become apparent from the following description.

**Disclosure of the invention**

<u>Definitions</u>

The term "colour ink", as used in disclosing the present invention, means an ink-jet ink exhibiting a colour different from black, e.g. cyan, magenta, yellow, orange, violet, red, blue and green.

The term "ink-jet ink set", as used in disclosing the present invention, means a combination of at least three colour inks, e.g. cyan ink (C), magenta ink (M) and yellow ink (Y).

The term "multi-density ink-jet ink set", as used in disclosing the present invention, means an ink-jet ink set as defined above comprising at least one combination of ink-jet inks with about the same hue but different chroma and lightness.

The term "graininess" as used in disclosing the present invention, means a state in which dots of discharged ink can be visually identified in the recorded image.

The term "colorants", as used in disclosing the present invention, means dyes and pigments.

The term "dye", as used in disclosing the present invention, means a colouring agent having a solubility of 10 mg/L or more in the medium in which it is applied and under the ambient conditions pertaining.

The term "pigment" is defined in DIN 55943, herein incorporated by reference, as an inorganic or organic, chromatic or achromatic colouring agent that is practically insoluble in the application medium under the pertaining ambient conditions, hence having a solubility of less than 10 mg/L therein.

The term "C.I." is used in disclosing the present application as an abbreviation for Colour Index.

The term "absorption spectrum ", as used in disclosing the present invention, means a plot of how much radiation a sample absorbs over a range of wavelengths; the absorption spectrum is a plot of absorbance versus wavelength.

The term "absorbance", as used in disclosing the present invention, is the common logarithm of the reciprocal of the transmittance of a solution.

The term "maximum absorbance", as used in disclosing the present invention, is the highest value of absorbance measured in the visible spectrum, i.e. the absorbance $A_{max}$ at a wavelength $A_{max}$ in the wavelength range of 400 to 700 nanometers.

The term "VIS" is used in disclosing the present application as an abbreviation for visible radiation.

The term "visible radiation" as used in disclosing the present invention, means electromagnetic radiation in the wavelength range of 400 to 700 nanometers.

The term "NIR" is used in disclosing the present application as an abbreviation for near infrared radiation.

The term "near infrared radiation" as used in disclosing the present invention, means electromagnetic radiation in the wavelength range of 700 to 1500 nanometers.

The term "UV" is used in disclosing the present application as an abbreviation for ultraviolet radiation.

The term "ultraviolet radiation" as used in disclosing the present invention, means electromagnetic radiation in the wavelength range of 4 to 400 nanometers.

The term "actinic radiation" as used in disclosing the present invention, means electromagnetic radiation capable of initiating photochemical reactions.

The term "alkyl" means all variants possible for each number of carbon atoms in the alkyl group i.e. for three carbon atoms: n-propyl and isopropyl; for four carbon atoms: n-butyl, isobutyl and tertiary-butyl; for five carbon atoms: n-pentyl, 1,1-dimethyl-propyl, 2,2-dimethylpropyl and 2-methyl-butyl etc.

The term "acyl group" means -(C=O)-aryl and -(C=O)-alkyl groups.

The term "aliphatic group" means saturated straight chain, branched chain and alicyclic hydrocarbon groups.

The term "unsaturated aliphatic group" means straight chain, branched chain and alicyclic hydrocarbon groups which contain at least one double or triple bond.

The term "aromatic group" as used in disclosing the present invention means an assemblage of cyclic conjugated carbon atoms, which are characterized by large resonance energies, e.g. benzene, naphthalene and anthracene.

The term "alicyclic hydrocarbon group" means an assemblage of cyclic carbon atoms, which do not form an aromatic group, e.g. cyclohexane.

The term "substituted" as used in disclosing this present invention means that one or more of the carbon atoms and/or that a hydrogen atom of one or more of carbon atoms in an aliphatic group, an aromatic group or an alicyclic hydrocarbon group, are replaced by an oxygen atom, a nitrogen atom, a halogen atom, a silicon atom, a sulphur atom, a phosphorous atom, selenium atom or a tellurium atom. Such substituents include hydroxyl groups, ether groups, carboxylic acid groups, ester groups, amide groups and amine groups.

The term "heteroaromatic group" means an aromatic group wherein at least one of the cyclic conjugated carbon atoms is replaced a nitrogen atom, a sulphur atom an oxygen atom or a phosphorous atom.

The term "heterocyclic group" means an alicyclic hydrocarbon group wherein at least one of the cyclic carbon atoms is replaced by an oxygen atom, a nitrogen atom, a phosphorous atom, a silicon atom, a sulphur atom, a selenium atom or a tellurium atom.

Spectral Separation Factor (SSF)

The spectral separation factor SSF was found to be an excellent measure to characterize an ink-jet ink, as it takes into account properties related to light-absorption (e.g. wavelength of maximum absorbance $\lambda_{max}$ , shape of the absorption spectrum and absorbance-value at $\lambda_{max}$) as well as properties related to the dispersion quality and stability.

A measurement of the absorbance at a higher wavelength gives an indication on the shape of the absorption spectrum. The dispersion quality can be evaluated based on the phenomenon of light scattering induced by solid particles in solutions. Light scattering in pigment inks may be detected as an increased absorbance at higher wavelengths than the absorbance peak of the actual pigment. The dispersion stability can be evaluated by comparing the SSF before and after a heat treatment of e.g. a week at 80°C.

The spectral separation factor SSF of the ink is calculated by using the data of the recorded spectrum of an ink solution and comparing the maximum absorbance to the absorbance at a reference wavelength. The choice of this reference wavelength is dependent on the pigment(s) used:

- if the colour ink has a maximum absorbance $A_{max}$ between 400 and 500 nm then the absorbance $A_{ref}$ must be determined at a reference wavelength of 600 nm,
- If the colour ink has a maximum absorbance $A_{max}$ between 500 and 600 nm then the absorbance $A_{ref}$ must be determined at a reference wavelength of 650 nm,
- If the colour ink has a maximum absorbance $A_{max}$ between 600 and 700 nm then the absorbance $A_{ref}$ must be determined at a reference wavelength of 830 nm.

The spectral separation factor is calculated as the ratio of the maximum absorbance $A_{max}$ over the absorbance $A_{ref}$ at the reference wavelength.

$$SSF = \frac{A_{max}}{A_{ref}}$$

The SSF is an excellent tool to design ink-jet ink sets with large colour gamut. Often ink-jet ink sets are now commercialized, wherein the different inks are not sufficiently matched with each other. For example, the combined absorption of all inks does not give a complete absorption over the whole visible spectrum, e.g. "gaps" exist between the absorption spectra of the colorants. Another problem is that an ink might be absorbing in the range of another ink. The resulting colour gamut of these ink-jet ink sets is low or mediocre.

Objects of the present invention can be realized with a method for preparing an ink-jet ink set comprising the steps of:

(a) preparing colour inks;
(b) determining the spectral separation factor for the colour inks;
(c) selecting colour inks with an SSF larger than 70; and
(d) composing an ink-jet ink set comprising three colour inks of the colour inks selected with an SSF larger than 70.

An ink-jet ink set according to the present invention contains at least three colour inks with a spectral separation factor SSF larger than 70, particular preferably a SSF larger than 80, particular preferably a SSF larger than 120.

An ink-jet ink set according to the present invention preferably contains at least one colour ink with a spectral separation factor SSF larger than 120, most preferably at least two colour inks with a spectral separation factor SSF larger than 120. It was observed that especially when the yellow ink had an SSF larger than 120, excellent colour gamut was obtained.

Calculation of colour gamut

In order to avoid a cumbersome measurement of colour gamut, methods have been developed to calculate the potential gamut volume of colour devices and colour images. Important references are:

- **US 6633408** (KPG) discloses a method of modelling spectral characteristics of a photographic print.
- **MAHY, M**.. Gamut calculation of colour reproduction devices. Scottsdale, Arizona: 4th IS&T/SID Color Imaging Conference, 1995. p.145-150 (Volume 4).
- **SAITO, R**., **et al.** Extraction of Image Gamut Surface and Calculation of its Volume. Scottsdale, Arizona: 8th IS&T/SID Color Imaging Conference, 2000. p.330-334 (Volume 4).

The method for the calculation of the potential colour gamut for an ink-jet ink set according to present invention is based on a simulation of the colour gamut of an imaging material in reflection geometry, which can be thought of being produced by a given set of colorants in an idealized printing process. This ideal printing process is characterized by the validity of the Lambert-Beer law for the mixing of colorants within the image receiving layer (inner spectra) and the applicability of the Saunderson equation in order to describe the influence of the effect of the air interface (external spectra). In a second step, a surface triangulation method is used to calculate the volume of the simulated colour gamut. The choice of the ideal printing process facilitates to make abstraction from the limitations of paper, printers and/or printer driver settings in any real printing process, such that two ink sets can objectively be compared based on their spectral properties.

The model of the ideal printing process incorporates the following assumptions:

1. Homogenous distribution of colorants (and their mixtures) jetted on the imaging layer, i.e. continuous-tone printing like in a chromogenic photographic paper. The halftone structure of the printing process is not taken into account: All simulated test-patches are assumed to represent homogenous flat-fields. In addition, light-scattering processes are assumed to be absent within in the image receiving layer, unless the ideal diffuse reflection given by the paper base.

2. Mixtures and variations of the concentration of colorants in/on the imaging layer (inner spectra) are calculated according to the Lambert-Beer law, i.e. linear combination of the colorants absorption spectra in terms of spectral optical density $D_C(\lambda)$, $D_M(\lambda)$, $D_Y(\lambda)$, $D_K(\lambda)$ of C, M, Y and K, respectively, which are initially measured by a spectrophotometer in transmission mode (i.e. liquid solutions of the neat colorants in a quartz cell with a given nominal concentration). The coefficients c, m and y (0 - 100%) represent a relative part of the nominal concentration of the colorants and run over all combinations representing the surface of the CMY cube (i.e. at least one of the coefficients c,m,y has the value 0% or 100%).

$$D(\lambda) = c \cdot D_C(\lambda) + m \cdot D_M(\lambda) + y \cdot D_Y(\lambda) + k \cdot D_K(\lambda)$$
$$c, m, y \in [0\% \dots 100\%]$$

3. In addition, grey component removal is applied, i.e. the grey component $k(D_C(\lambda)+D_M(\lambda)+D_Y(\lambda))$ is replaced by the corresponding amount of $k\,D_K(\lambda)$, wherein k denotes the minimum of c, m, y.

$$D(\lambda) = (c-k) \cdot D_C(\lambda) + (m-k) \cdot D_M(\lambda) + (y-k) \cdot D_Y(\lambda) + k \cdot D_K(\lambda)$$
$$k = \min(c,m,y)$$

1. Starting from the calculated "internal optical density spectra" $D(\lambda)$ of colorant mixtures assumed to be homogeneously distributed, the optical effect of the air interface has to be taken into account to realistically simulate reflection image behaviour (i.e. "external spectra"). The presence of an air interface introduces two phenomena, namely 1) direct external surface reflections of the incoming light beam (reflectance factor $r_s$) and 2) internal surface reflections of light (reflectance factor $r_i$), that has been diffusely reflected by the substrate (reflectance spectrum $R_s(\lambda)$) at the lower boundary of the imaging layer. The internal reflection at the air interface gives rise to multiple optical reflections within the imaging layer. All these effects are taking into account by the formalism of Saunderson, that allows to calculate external reflection spectra $R_{ext}(I)$ from internal reflection spectra $R_{int}(I)$:

$$R_{ext}(\lambda) = r_s + \frac{(1-r_s)(1-r_i)R_{int}(\lambda)}{1-r_i R_{int}(\lambda)}$$

$$R_{int}(\lambda) = R_s(\lambda) \cdot 10^{-epl \cdot D(\lambda)}$$

2. The effective pathlength "epl" describes the factor, by which the pathlength of the light inside the imaging layer is increased in comparison to the transmission case. This is due to geometric reasons: light is travelling twice through the layer because of reflection geometry. Furthermore, the pathlength is increased for beams other than normal with respect to the interface. In case of diffuse illumination, another factor 2 is found for the epl.

It is assumed, that $r_s$, $r_i$ and epl do not vary with the wavelength $\lambda$. The parameter settings used are: $r_s = 0.001$ (high gloss surface), $r_i = 0.6$, epl = 2.4 (assuming 45/0 reflection geometry). In accordance with the assumption of an ideal printing process, a substrate without absorption is considered, i.e. $R_s(\lambda) = 1$.

1. From the set of reflection spectra, that represent all the combinations of colorants on the surface of the CMY cube, the corresponding set of CIE L*a*b* co-ordinates are calculated based on the CIE 1931 (2 degree) observer and D50 as illuminant.

2. The set of CIE L*a*b* values represents an ordered cloud of points of the surface of the potential colour gamut. To calculate the volume enclosed by these points - i.e. the gamut volume - first a surface triangulation technique is applied (Delaunay type), from which a set of triangle facets is obtained, that completely cover the colour gamut. In a next step, an arbitrarily chosen, but then fixed point inside the cloud of points, e.g. the centre of gravity in terms of L*a*b*) is defined as "inner point". Together with this "inner point" each surface triangle facet forms a tetrahedron, from which the volume can be calculated using standard methods of vector analysis:

$$V = 1/6 \, |e_1.(e_2 \times e_3)|$$

wherein $e_1$, $e_2$ and $e_3$ denote the vectors connecting the aforementioned "inner point" with each of the 3 cornerpoints of a surface triangle facet. The total volume of the colour gamut is then obtained by summing up the volume of all individual tetrahedrae.

By using this model of an ideal printing process and the triangulation technique of the gamut surface, the potential colour gamut of a colorant set can be calculated and quantitatively compared with other sets of colorants. Due to the idealized nature of the printing process the potential colour gamut of a set of colorants is obtained regardless of interactions of the colorants with the receiving imaging material and/or performance of the printer and its control software. This circumvents the known shortcomings in experimental gamut determination due to limitations and/of availability of paper, printer and the printing process. The method can be regarded as an absolute, objective benchmark for the determination of the potential gamut volume of a given set of colorants. The method described above is referred to in the examples as the colour gamut calculation method.

Ink-jet ink set

The ink-jet ink set according to present invention comprises three colour inks each containing at least one pigment , wherein, the first colour ink has a maximum absorbance $A_{max}$ between 400 and 500 nm and an absorbance $A_{ref}$ at a reference wavelength of 600 nm, the second colour ink has a maximum absorbance $A_{max}$ between 500 and 600 nm and an absorbance $A_{ref}$ at a reference wavelength of 650 nm, the third colour ink has a maximum absorbance $A_{max}$ between 600 and 700 nm and an absorbance $A_{ref}$ at a reference wavelength of 830 nm, characterized in that each colour ink has a spectral separation factor SSF larger than 70 with SSF = Amax / Aref.

In a preferred embodiment the ink-jet ink set according to this invention, at least one of the colour inks is a water based ink-jet ink.

In another preferred embodiment the ink-jet ink set according to this invention, at least one of the colour inks is a radiation curable ink-jet ink.

In a particular preferred embodiment the ink-jet ink set according to this invention, at least one of the colour inks is a radiation curable ink-jet ink containing a photoinitiator.

In a preferred embodiment the ink-jet ink set according to this invention, comprises at least one black ink-jet ink.

In a preferred embodiment the ink-jet ink set according to this invention is a multi-density ink-jet ink set.

Objects of the present invention have been realized with a method for ink-jet printing comprising the steps of:

(a) providing a ink-jet ink set according to the present invention; and
(b) jetting colour inks of said ink-jet ink set on an ink-receiver.

Ink-jet Ink

The colour inks of the ink-jet ink set according to the present invention each contain at least one pigment to impart the desired colour to the ink. The pigment may be present in the ink composition in any effective amount, generally from about 0.5 to about 20 percent by weight of the ink.

The colour inks of the ink-jet ink set according to the present invention may contain at least one humectant to prevent the clogging of the nozzle, due to its ability to slow down the evaporation rate of ink.

The colour inks of the ink-jet ink set according to the present invention may further include at least one surfactant. The surfactant can be anionic, cationic, non-ionic, or zwitter-ionic and added in a total amount below 20 wt% based on the total ink weight.

A biocide may be added to the colour inks of the ink-jet ink set according to the present invention to prevent unwanted microbial growth, which may occur in the ink-jet ink over time. The biocide may be used either singly or in combination.

The colour inks of the ink-jet ink set according to the present invention may further comprise at least one thickener for viscosity regulation in the ink-jet ink.

The colour inks of the ink-jet ink set according to the present invention may further comprise at least one antioxidant for improving the storage stability of an image.

The colour inks of the ink-jet ink set according to the present invention may contain water and/or organic solvents, such as alcohols, fluorinated solvents and dipolar aprotic solvents. Preferable solvents are methanol, ethanol, propanol, 1-butanol, 1-pentanol, 2-butanol, t.-butanol, glycol, glycolethers, N-methylpyrrolidone, N,N-dimethylacetamid, N, N-dimethylformamid, 2,4-pentanedione and hexafluoroacetone are used.

In one embodiment the colour inks of the ink-jet ink set according to the present invention are radiation curable ink-jet inks containing a radiation curable compound. The radiation curable compound can be selected from monomers and/or oligomers that can be polymerized by the curing means of the ink-jet printer.

The radiation curable colour inks of the ink-jet ink set according to the present invention may preferably further comprise at least one photo-initiator.

The radiation curable colour inks of the ink-jet ink set according to the present invention may preferably further comprise at least one inhibitor.

The colour inks of the ink-jet ink set according to the present invention may include additives such as buffering agents, anti-mold agents, pH adjustment agents, electric conductivity adjustment agents, chelating agents, anti-rusting agents, light stabilizers, monomers, dendrimers, polymers, and the like. Such additives may be included in the colour inks of the ink-jet ink set according to the present invention in any effective amount, as desired. Examples of pH controlling agents suitable for inks of the present invention include, but are not limited to, acids, and bases, including organic amines and hydroxides of alkali metals such as lithium hydroxide, sodium hydroxide and potassium hydroxide. The amount included will depend, of course, on the specific component being included.

The colour inks of the ink-jet ink set according to the present invention may further comprise conducting or semi-conducting polymers, such as polyanilines, polypyrroles, polythiophenes such as poly(ethylenedioxythiophene) (PEDOT),substituted or unsubstituted poly(phenylenevinylenes) (PPV's) such as PPV and MEH-PPV, polyfluorenes such as PF6, etc.

Pigments

The pigment particles should be sufficiently small to permit free flow of the ink through the ink-jet printing device, especially at the ejecting nozzles which usually have a diameter ranging from 10 $\mu$m to 50 $\mu$m. The particle size influences also the pigment dispersion stability. It is also desirable to use small particles for maximum colour strength.

The average particle diameter of the pigment should be between 0.005 $\mu$m and 15 $\mu$m. Preferably, the average pigment particle size is between 0.005 and 5 $\mu$m, more preferably between 0.005 and 1 $\mu$m, and particularly preferably between 0.005 and 0.3 $\mu$m. Larger pigment particle sizes may be used as long as the objectives of the present invention are achieved.

Very fine dispersions of pigments and methods for their preparation are disclosed in e.g. **EP 776952** A (KODAK), **US 5538548** (BROTHER) , **US 5443628** (VIDEOJET SYSTEMS), **EP 259130** A (OLIVETTI) , US **5285064** (EXTREL) , **EP 429828** A (CANON) and **EP 526198** A (XEROX) .

In a preferred embodiment the ink-jet ink set comprises an ink wherein the pigment has an average particle size larger than 100 nm, more preferably the ink-jet ink set comprises two or more colour inks having pigments with an average particle size larger than 100 nm. In striving to obtain a high colour gamut, milling of pigments to average particle sizes smaller than 100 nm, for example, about 20 to 50 nm delivers an increased colour gamut but also a decrease in the light fastness of printed inkjet images.

The pigment can be black, cyan, magenta, yellow, red, orange, violet, blue, green, brown, mixtures thereof, and the like.

Suitable pigments for the colour inks of the ink-jet ink set according to the present invention include: C. I. Pigment Yellow 17, C. I. Pigment Blue 27, C. I. Pigment Red 49:2, C. I. Pigment Red 81:1, C. I. Pigment Red 81:3, C. I. Pigment Red 81 :x, C. I. Pigment Yellow 83, C. I. Pigment Red 57:1, C. I. Pigment Red 49:1, C. I. Pigment Violet 23, C. I. Pigment Green 7, C. I. Pigment Blue 61, C. I. Pigment Red 48:1, C. I. Pigment Red 52:1, C. I. Pigment Violet 1, C. I. Pigment White 6, C.I. Pigment Blue 15, C. I. Pigment Yellow 12, C. I. Pigment Blue 56, C. I. Pigment Orange 5, C. I. Pigment Yellow 14, C. I. Pigment Red 48:2, C. I. Pigment Blue 15:3, C. I. Pigment Yellow 1, C. I. Pigment Yellow 3, C. I. Pigment Yellow 13, C. I. Pigment Orange 16, C. I. Pigment Yellow 55, C. I. Pigment Red 41, C. I. Pigment Orange 34, C. I. Pigment Blue 62, C. I. Pigment Red 22, C. I. Pigment Red 170, C. I. Pigment Red 88, C. I. Pigment Yellow 151, C. I. Pigment Red 184, C. I. Pigment Blue 1:2, C. I. Pigment Red 3, C. I. Pigment Blue 15:1, C.I. Pigment Blue 15:3, C.I. Pigment Blue 15:4, C. I. Pigment Red 23, C. I. Pigment Red 112, C. I. Pigment Yellow 126, C. I. Pigment Red 169, C. I. Pigment Orange 13, C. I. Pigment Red 1-10, 12, C.I. Pigment Blue 1:X, C.I. Pigment Yellow 42, C.I. Pigment Red 101, C.I. Pigment Brown 6, C. I. Pigment Brown 7, C. I. Pigment Brown 7:X, C. I. Pigment Metal 1, C. I. Pigment Metal 2, C.I. Pigment Yellow 128, C.I. Pigment Yellow 93, C.I. Pigment Yellow 74, C.I. Pigment Yellow 138, C.I. Pigment Yellow 139, C.I. Pigment Yellow 154, C. I. Pigment Yellow 185, C.I. Pigment Yellow 180, C.I. Pigment Red 122, C.I. Pigment Red 184, bridged aluminium phthalocyanine pigments and solid solutions of pigments.

For the black ink, suitable pigment materials include carbon blacks such as Regal 400R, Mogul L, Elftex 320 from Cabot Co., or Carbon Black FW18, Special Black 250, Special Black 350, Special Black 550, Printex 25, Printex 35, Printex 55, Printex 150T from DEGUSSA Co., and C.I. Pigment Black 7 and C.I. Pigment Black 11. Additional examples of suitable pigments are disclosed in **US 5389133** (XEROX).

Further the pigment may be chosen from those disclosed by **HERBST, W**, **et al**. Industrial Organic Pigments, Production, Properties, Applications. 2nd edition. vch, 1997.

Particular preferred pigments are C.I. Pigment Yellow 1, 3, 10, 12, 13, 14, 17, 65, 73, 74, 75, 83, 93, 109, 120, 128, 138, 139, 150, 151, 154, 155, 180, 185; C.I. Pigment Red 17, 22, 23, 57:1, 122, 144, 146,170, 176, 184, 185, 188, 202, 206, 207, 210; C.I. Pigment Violet 19 and C.I. Pigment Violet 19; C.I. Pigment Blue 15:1, C.I. Pigment Blue 15:2, C.I. Pigment Blue 15:3, C.I. Pigment Blue 15:4, and C.I. Pigment Blue 16.

The ink-jet ink set according to the present invetion preferably comprises an azoacetoacetanilide pigment as a yellow pigment, a quinacridone as a magenta pigment and a Cu-phthalocyanine pigment as a cyan pigment.

In a preferred embodiment the colour inks of the ink-jet ink set according to the present invention are prepared using the pigments C.I. Pigment Yellow 74, C.I. Pigment Red 122 and a β-Cu Phthalocyanine pigment.

Dispersant

In the preparation of an ink-jet ink, the pigment may be added in the form of a dispersion comprising a dispersant, which is also called a pigment stabilizer.

The dispersant used in a colour ink for the ink-jet ink set according to the present invention is a preferably polymeric dispersant. The polymeric dispersant may be, for example, of the polyester, polyurethane, polyvinyl of polyacrylate type, especially in the form of copolymer or block copolymer with a molecular weight between 2000 and 100000, more preferably between 2500 and 25000, and would typically be incorporated at 2.5% to 200% by weight of the pigment.

Suitable examples are DISPERBYK™ dispersants available from BYK CHEMIE, JONCRYL™ dispersants available from JOHNSON POLYMERS and SOLSPERSE™ dispersants available from ZENECA. A detailed list of non-polymeric as well as some polymeric dispersants is disclosed by **MC** CUTCHEON. Functional Materials, North American Edition. Glen Rock,N.J.: Manufacturing Confectioner Publishing Co., 1990. p.110-129.

Suitable pigment stabilizers are also disclosed in **DE 19636382** (BAYER) , **US 5720802** (XEROX) , **US 5713993** (DU PONT) , PCT/GB95/02501, **US 5085689** (BASF) and **US 2303376** (FUJITSU ISOTEC ) .

Polymeric dispersants can be prepared via addition or condensation type polymerizations. Typical monomers that can be used for addition type polymerizations include: acrylic acid, methacrylic acid, maleic acid (or their salts), maleic anhydride; alkyl(meth)acrylates (linear, branched and cycloalkyl) such as methyl(meth)acrylate, n-butyl(meth) acrylate, tert-butyl(meth)acrylate, cyclohexyl(meth)acrylate, and 2-ethylhexyl(meth)acrylate; aryl(meth)acrylates such as benzyl(meth)acrylate, and phenyl(meth)acrylate; hydroxyalkyl(meth)acrylates such as hydroxyethyl(meth)acrylate, and hydroxypropyl(meth)acrylate; (meth)acrylates with other types of functionalities (e.g. oxirane, amino, fluoro, polyethylene oxide, phosphate- substituted) such as glycidyl (meth)acrylate, dimethylaminoethyl(meth)acrylate, trifluoroethyl acrylate, methoxypolyethyleneglycol (meth)acrylate, and tripropyleneglycol(meth)acrylate phosphate; allyl derivatives such as allyl glycidyl ether; styrenics such as styrene, α-methylstyrene, 4-methylstyrene, 4-hydroxystyrene, 4-acetoxystyrene, and styrenesulfonic acid; (meth)acrylonitrile; (meth)acrylamides (including N-mono and N,N-disubstituted) such as N-benzyl (meth)acrylamide; maleimides such as N-phenyl maleimide, N-benzyl maleimide, and N-ethyl maleimide; vinyl derivatives such as vinylcaprolactam, vinylpyrrolidone, vinylimidazole, vinylnaphthalene, and vinyl halides; vinylethers such as vinylmethyl ether; vinylesters of carboxylic acids such as vinylacetate, vinylbutyrate, and vinyl benzoate. Typical condensation type polymers include polyurethanes, polyamides, polyesters, polycarbonates, polyethers, polyureas, polyimines, polyimides, and polyketones, or combinations thereof. Monomers that can be used to prepare such polycondensation products can be found in Polymer Handbook (Eds. J. Brandrup, E.H. Immergut, E.A Grulke), 4th edition, Vol. 1 + 2, Wiley-Interscience (1999).

Humectants

Suitable humectants include triacetin, N-methyl-2-pyrrolidone, glycerol, urea, thiourea, ethylene urea, alkyl urea, alkyl thiourea, dialkyl urea and dialkyl thiourea, diols, including ethanediols, propanediols, propanetriols, butanediols, pentanediols, and hexanediols; glycols, including propylene glycol, polypropylene glycol, ethylene glycol, polyethylene glycol, diethylene glycol, tetraethylene glycol, and mixtures and derivatives thereof.

A preferred humectant is glycerol and added to the ink-jet ink formulation in an amount of 0.1 to 30 wt% of the formulation, more preferably 0.1 to 10 wt% of the formulation, and most preferably approximately 4.0 to 7.0 wt%.

Other preferred humectants are propanediol; 1,2-pentanediol, 1,5-pentanediol 1,2-hexanediol and 1,6-hexanediol that are known as penetrating solvents having properties pertaining to surfactants.

Surfactants

Suitable surfactants include fatty acid salts, ester salts of a higher alcohol, alkylbenzene sulphonate salts, sulphosuccinate ester salts and phosphate ester salts of a higher alcohol (for example, sodium dodecylbenzenesulphonate and sodium dioctylsulphosuccinate), ethylene oxide adducts of a higher alcohol, ethylene oxide adducts of an alkylphenol, ethylene oxide adducts of a polyhydric alcohol fatty acid ester, and acetylene glycol and ethylene oxide adducts thereof (for example, polyoxyethylene nonylphenyl ether, and SURFYNOL™ 104, 104H, 440, 465 and TG available from AIR PRODUCTS & CHEMICALS INC.

Biocides

Suitable biocides for the ink-jet ink of the present invention include sodium dehydroacetate, 2-phenoxyethanol, sodium benzoate, sodium pyridinethion-1-oxide, ethyl p-hydroxybenzoate and 1,2-benzisothiazolin-3-one and salts thereof. A preferred biocide for the ink-jet ink of the present invention is Proxel™ GXL available from ZENECA COLOURS.

A biocide is preferably added in an amount of 0.001 to 3 wt%, more preferably 0.01 to 1.00 wt. %, each based on the ink-jet ink.

Thickeners

Suitable thickeners for use in the colour inks of the ink-jet ink set according to the present invention include urea or urea derivatives, hydroxyethylcellulose, carboxymethylcellulose, hydroxypropylcellulose, derived chitin, derived starch, carrageenan, and pullulan; DNA, proteins, poly(styrenesulphonic acid), poly(styrene-co-maleic anhydride), poly(alkyl vinyl ether-co-maleic anhydride), polyacrylamid, partially hydrolyzed polyacrylamid, poly(acrylic acid), poly(vinyl alcohol), partially hydrolyzed poly(vinyl acetate), poly(hydroxyethyl acrylate), poly(methyl vinyl ether), polyvinylpyrrolidone, poly(2-vinylpyridine), poly(4-vinylpyridine) and poly(diallyldimethylammonium chloride).

The thickener is added preferably in an amount of 0.01 to 20 wt%, more preferably 0.1 to 10 wt% based on the ink-jet ink.

Preferably the viscosity of the colour inks of the ink-jet ink set according to the present invention are lower than 100 mPa.s, more preferably lower than 50 mPa.s, and most preferably lower than 30 mPa.s at a shear rate of 100 S$^{-1}$ and a temperature between 20 and 110°C.

Antioxidants

As the antioxidant for improving storage stability of an image, various organic and metal complex types fading preventives can be used in the invention. Organic fading preventives include hydroquinones, alkoxyphenols, dialkoxyphenols, phenols, anilines, amines, indanes, coumarones, alkoxyanilines and heterocycles, while metal complexes include nickel complexes and zinc complexes. More specifically, compounds as described in "Research Disclosure, No. 17643, VII, Section I or J, No. 15162, No. 18716, left column on page 650, No. 36544, page 527, No. 307105, page 872, and the patent cited in No. 15162, and compounds embraced in the formula of the typical compounds and compound examples described on pages 127 to 137 of JP 62215272 A (FUJI) .

The stabilizer is added in an amount of 0.1 to 30 wt%, preferably 1 to 10 wt% based on the ink.

Monomers and Oligomers

Monomers and/or oligomers are polymerized by the curing means of the ink-jet printer. Monomers, oligomers or prepolymers may possess different degrees of functionality, and a mixture including combinations of mono-, di-, tri- and higher functionality monomers, oligomers or prepolymers may be used. These components are preferably UV curable.

Adjusting the ratio between the monomers and oligomers is also a method of adjusting the viscosity of the ink. A higher functionality results in a higher viscosity.

Any method of conventional radical polymerization, photo-curing system using photo acid or photo base generator, or photo induction alternating copolymerization may be employed. In general, radical polymerization and cationic polymerization are preferred, and photo induction alternating copolymerization needing no initiator may also be employed. Further, a hybrid system of combinations of these systems is also effective.

Radical polymerization is the most widely employed process. Cationic polymerization is however superior in effectiveness due to lack of inhibition of polymerization by oxygen, however it is slow and its cost is high. If cationic polymerization is used, it is preferred to use an epoxy compound.

Any polymerizable compound commonly known in the art may be employed. Particularly preferred for the colour inks of the ink-jet ink set according to the present invention, are monofunctional and/or polyfunctional acrylate monomers, oligomers or prepolymers, such as isoamyl acrylate, stearyl acrylate, lauryl acrylate, octyl acrylate, decyl acrylate, isoamylstyl acrylate, isostearyl acrylate, 2-ethylhexyl-diglycol acrylate, 2-hydroxybutyl acrylate, 2-acryloyloxyethylhexahydrophthalic acid, butoxyethyl acrylate, ethoxydiethylene glycol acrylate, methoxydiethylene glycol acrylate, methoxypolyethylene glycol acrylate, methoxypropylene glycol acrylate, phenoxyethyl acrylate, tetrahydrofurfuryl acrylate, isobornyl acrylate, 2-hydroxyethyl acrylate, 2-hydroxypropyl acrylate, 2-hydroxy-3-phenoxypropyl acrylate, vinyl ether acrylate, 2-acryloyloxyethylsuccinic acid, 2-acryloyxyethylphthalic acid, 2-acryloxyethyl-2-hydroxyethyl-phthalic acid, lactone modified flexible acrylate, and t-butylcyclohexyl acrylate, triethylene glycol diacrylate, tetraethylene glycol diacrylate, polyethylene glycol diacrylate, dipropylene glycol diacrylate, tripropylene glycol diacrylate, polypropylene glycol diacrylate, 1,4butanediol diacrylate, 1,6hexanediol diacrylate, 1,9nonanediol diacrylate, neopentyl glycol diacrylate, dimethyloltricyclodecane diacrylate, bisphenol A EO (ethylene oxide) adduct diacrylate, bisphenol A PO (propylene oxide) adduct diacrylate, hydroxypivalate neopentyl glycol diacrylate, propoxylated neopentyl glycol diacrylate, alkoxylated dimethyloltricyclodecane diacrylate and polytetramethylene glycol diacrylate, trimethylolpropane triacrylate, EO modified trimethylolpropane triacrylate, tri (propylene glycol) triacrylate, caprolactone modified trimethylolpropane triacrylate, pentaerythritol triacrylate, pentaerithritol tetraacrylate, pentaerythritolethoxy tetraacrylate, dipentaerythritol hexaacrylate, ditrimethylolpropane tetraacrylate, glycerinpropoxy triacrylate, and caprolactam modified dipentaerythritol hexaacrylate, or an N-vinylamide such as, N-vinylcaprolactam or N-vinylformamide ; or acrylamide or a substituted acrylamide, such as acryloylmorpholine.

Furthermore, methacrylates corresponding to the above-mentioned acrylates may be used with these acrylates. Of the methacrylates, methoxypolyethylene glycol methacrylate, methoxytriethylene glycol methacrylate, hydroxyethyl methacrylate, phenoxyethyl methacrylate, cyclohexyl methacrylate, tetraethylene glycol dimethacrylate, and polyethylene glycol dimethacrylate are preferred due to their relatively high sensitivity and improved adhesion to an ink-receiver surface.

Furthermore, the colour inks may also contain polymerizable oligomers. Examples of these polymerizable oligomers include epoxy acrylates, aliphatic urethane acrylates, aromatic urethane acrylates, polyester acrylates, and straight-chained acrylic oligomers.

Photo-initiators

A catalyst called a photo-initiator typically initiates the polymerization reaction. The photo-initiator requires less energy to activate than the monomers and oligomers to form the polymer.

The photo-initiator absorbs light and is responsible for the production of free radicals or cations. Free radicals or cations are high-energy species that induce polymerization of monomers, oligomers and polymers and with polyfunctional monomers and oligomers thereby also inducing crosslinking.

A preferred amount of photo-initiator is 1 to 30 wt% of the total ink weight, and more preferably 1 to 10 wt% of the total ink weight.

Irradiation with actinic radiation may be realized in two steps by changing wavelength or intensity. In such cases it is preferred to use two types of photo-initiator together.

Photo-initiators are necessary for free radical curing and may include, but are not limited to, the following compounds or combinations thereof: benzophenone and substituted benzophenones, 1-hydroxycyclohexyl phenyl ketone, thioxanthones such as isopropylthioxanthone,2-hydroxy-2-methyl-1-phenylpropan-1-one, 2-benzyl-2-dimethylamino- (4-morpholinophenyl) butan-1-one, benzil dimethylketal, bis (2,6-dimethylbenzoyl) -2,4, 4-trimethylpentylphosphine oxide, 2,4,6trimethylbenzoyldiphenylphosphine oxide, 2-methyl-1- [4-(methylthio)phenyl] -2-morpholinopropan-1-one, 2,2-dimethoxy-1, 2-diphenylethan-1-one or 5,7-diiodo-3- butoxy-6-fluorone, diphenyliodonium fluoride and triphenylsulfonium hexafluophosphate.

Suitable photo-initiators for use in the radiation curable colour inks of an ink-jet ink set according to the present invention include Irgacure™ 184, Irgacure™ 500, Irgacure™ 907, Irgacure™ 369, Irgacure™ 1700, Irgacure™ 651, Irgacure™ 819, Irgacure™ 1000, Irgacure™ 1300, Irgacure™ 1870, Darocur™ 1173, Darocur™ 4265 and Darocur™ ITX available from CIBA SPECIALTY CHEMICALS, Lucerin TPO available from BASF AG, Esacure™ KT046, Esacure™ KIP150, Esacure™ KT37 and Esacure™ EDB available from LAMBERTI, H-Nu™ 470 and H-NU™ 470X available from SPECTRA GROUP Ltd. and isopropyl-thioxanthone.

Inhibitors

Suitable polymerization inhibitors include phenol type antioxidants, hindered amine light stabilizers, phosphor type antioxidants, hydroquinonemonomethyl ether commonly used in (metha)acrylate monomers, and hydroquinone, t-butylcatechol, pyrogallol may also be used. Of these, a phenol compound having a double bond in molecules derived from acrylic acid is particularly preferred due to its having a polymerization-restraining effect even when heated in a closed, oxygen-free environment. Suitable inhibitors are, for example, Sumilizer™ GA-80, Sumilizer™ GM and Sumilizer™ GS produced by Sumitomo Chemical Co., Ltd; Genorad™ 16 available from RAHN.

Since excessive addition of these polymerization inhibitors will lower the ink sensitivity to curing, it is preferred that the amount capable of preventing polymerization be determined prior to blending. The amount of a polymerization inhibitor is generally between 200 and 20,000 ppm of the total ink weight.

Suitable combinations of compounds which decrease oxygen polymerization inhibition with radical polymerization inhibitors are: 2-benzyl-2-dimethylamino-1-(4-morpholinophenyl)-butane-1 and 1-hydroxy-cyclohexyl-phenyl-ketone; 1-hydroxy-cyclohexyl-phenyl-ketone and benzophenone; 2-methyl-1 [4-(methylthio)phenyl]-2-morpholinopropane-1on or 2-methyl-1 [4-(methylthio)phenyl]-2-morpholinopropane-1-on and diethyltuioxanthone or isopropylthioxanthone; and benzophenone and acrylate derivatives having a tertiary amino group, and addition of tertiary amines. An amine compound is commonly employed to decrease an oxygen polymerization inhibition or to increase sensitivity. However, when an amine compound is used in combination with a high acid value compound, the storage stability at high temperature tends to be decreased. Therefore, specifically, the use of an amine compound with a high acid value compound in ink-jet printing should be avoided.

Synergist additives may be used to improve the curing quality and to diminish the influence of the oxygen inhibition. Such additives include, but are not limited to ACTILANE™ 800 and ACTILANE™ 725 available from AKZO NOBEL, Ebecryl™ P115 and Ebecryl™ 350 available from UCB CHEMICALS and CD 1012, Craynor CN 386 (amine modified acrylate) and Craynor CN 501 (amine modified ethoxylated trimethylolpropane triacrylate) available from CRAY VALLEY.

The content of the synergist additive is in the range of 0 to 50 wt%, preferably in the range 5 to 35 wt% based on the total weight of the radiation curable colour ink.

Solvents

The colour inks of the ink-jet ink set according to the present invention may contain as a solvent, water and/or organic solvents, such as alcohols, fluorinated solvents and dipolar aprotic solvents. Preferably the ink-jet inks contain a solvent in a concentration between 10 and 80 wt%, particularly preferably between 20 and 50 wt%, each based on the total weight of the ink-jet ink.

Radiation curable colour inks of the ink-jet ink set according to the present invention preferably consist of 100% solids. Sometimes, it can be advantageous to add an extremely small amount of an organic solvent to improve adhesion to the ink-receiver surface after UV curing. In this case, the added solvent can be any amount in the range which does not cause problems of solvent resistance and VOC, and preferably 0.1-5.0 wt%, and particularly preferably 0.1-3.0 wt%, each based on the total weight of the radiation curable ink-jet ink.

Suitable organic solvents include alcohol, aromatic hydrocarbons, ketones, esters, aliphatic hydrocarbons, higher fatty acids, carbitols, cellosolves, higher fatty acid esters. Suitable alcohols include, methanol, ethanol, propanol and 1-butanol, 1-pentanol, 2-butanol, t.-butanol. Suitable aromatic hydrocarbons include toluene, and xylene. Suitable ketones include methyl ethyl ketone, methyl isobutyl ketone, 2,4-pentanedione and hexafluoroacetone. Also glycol, glycolethers, N-methylpyrrolidone, N,N-dimethylacetamid, N, N-dimethylformamid may be used.

Preparation of an ink-jet ink

A pigment dispersion for preparing a colour ink of an ink-jet ink set according to the present invention, may be prepared by mixing, milling and dispersion of pigment and polymeric dispersant. Mixing apparatuses may include a pressure kneader, an open kneader, a planetary mixer, a dissolver, and a Dalton Universal Mixer. Suitable milling and dispersion apparatuses are a ball mill, a pearl mill, a colloid mill, a high-speed disperser, double rollers, a bead mill, a paint conditioner, and triple rollers. The dispersions may also be prepared using ultrasonic energy.

Many different types of materials may be used as milling media, such as glasses, ceramics, metals, and plastics. In a preferred embodiment, the grinding media can comprise particles, preferably substantially spherical in shape, e.g. beads consisting essentially of a polymeric resin or yttrium stabilized zirconium beads. For efficient milling, the size of the beads used is preferably between 0.2 and 0.5 mm, most preferably between 0.3 and 0.4 mm. Preferably at least 50% of the volume (= 50 volume%) is effectively filled with beads. This means, for example, that for a bead mill having an internal volume of 10 L, the beads are present in a volume of 5 L (= weight of beads used divided by the density of the beads).

In the process of mixing, milling and dispersion, each process is performed with cooling to prevent build up of heat, and for radiation curable inks also as much as possible under light conditions in which UV-light has been substantially excluded.

If the colour ink contains more than one pigment, the colour ink may be prepared using separate dispersions for each pigment, or alternatively several pigments may be mixed and co-milled in preparing the dispersion.

The dispersion process can be carried out in a continuous, batch or semi-batch mode.

The preferred amounts and ratios of the ingredients of the mill grind will vary widely depending upon the specific materials and the intended applications. The contents of the milling mixture comprise the mill grind and the milling media. The mill grind comprises pigment, dispersant and a liquid carrier such as water. For aqueous ink-jet inks, the pigment is usually present in the mill grind at 1 to 50 wt%, excluding the milling media. The weight ratio of pigment over dispersant is preferably 20:1 to 1:2.

The milling time is determined by the SSF. A colour ink is milled until a spectral separation factor SSF larger than 70 with $SSF = A_{max} / A_{ref}$ is measured. The milling time can vary widely and depends upon the pigment, mechanical means and residence conditions selected, the initial particle size, etc. In the present invention pigment dispersions with an average particle size of less than 100 nm may be prepared.

After milling is completed, the milling media is separated from the milled particulate product (in either a dry or liquid dispersion form) using conventional separation techniques, such as by filtration, sieving through a mesh screen, and the like. Often the sieve is built into the mill, e.g. for a bead mill. The milled pigment concentrate is preferably separated from the milling media by filtration.

In general it is desirable to make the colour ink in the form of a concentrated mill grind, which is subsequently diluted to the appropriate concentration for use in the ink-jet printing system. This technique permits preparation of a greater quantity of pigmented ink from the equipment. If the mill grind was made in a solvent, it is diluted with water and optionally other solvents to the appropriate concentration. If it was made in water, it is diluted with either additional water or water miscible solvents to make a mill grind of the desired concentration. If the pigment dispersion is intended for preparing a radiation curable colour ink, it is preferably diluted using monomers and/or oligomers. By dilution, the ink is adjusted to the desired viscosity, surface tension, colour, hue, saturation density, and print area coverage for the particular application.

In a preferred embodiment the method for preparing an ink-jet ink set according to the present invention comprises the steps of:

(a) preparing a first colour ink by mixing a polymeric dispersant and a pigment having a maximum absorbance $A_{max}$ between 400 and 500 nm and an absorbance $A_{ref}$ at a reference wavelength of 600 nm;
(b) preparing a second colour ink by mixing a polymeric dispersant and a pigment having a maximum absorbance $A_{max}$ between 500 and 600 nm and an absorbance $A_{ref}$ at a reference wavelength of 650 nm;
(c) preparing a third colour ink by mixing a polymeric dispersant and a pigment having a maximum absorbance $A_{max}$ between 600 and 700 nm and an absorbance $A_{ref}$ at a reference wavelength of 830 nm;
(d) milling the mixtures of polymeric dispersants and pigments of each colour ink;
(e) measuring the absorbances at $A_{max}$ and at $A_{ref}$ and calculating the spectral separation factor SSF for each colour ink;
(f) repeating steps (d)-(e) at least once for the colour ink(s) having a spectral separation factor SSF smaller or equal than 70.

## EXAMPLES

The present invention will now be described in detail by way of Examples hereinafter.

## Materials

All materials used in the examples were readily available from standard commercial sources such as ALDRICH CHEMICAL Co. (Belgium) unless otherwise specified. The following materials were used:

Hansa Brilliant Yellow™ is C.I. Pigment Yellow 74 available from HOECHST.

Ink-jet Magenta™ is C.I. Pigment Red 122 available from CLARIANT. Sunfast™ Blue is C.I. Pigment Blue 15:3 available from SUN CHEMICAL. Duasyn Direct Turquoise Blue™ FRL-SF Liq. is a cyan dye available from CLARIANT.

Duasyn Briljant Red™ F3b-SF Liq. is a magenta dye available from CLARIANT.

Duasyn Yellow™ 3G-SF Liq. is a yellow dye available from CLARIANT. Surfynol™ 104H is a solution of 2,4,7,9-tetramethyl-5-decyn-4,7-diol available from Air Products and Chemical Co.

Acticide™ BW10 is a biocide available from Thor Chemicals (UK) Ltd. Proxel™ Ultra 5 is a biocide from AVECIA.

Edaplan™ 482 is a polymeric dispersant from MUNZING CHEMIE GMBH. Epson 2000P™, EPSON 7600P™ ,and Epson R800™ are high quality pigment ink-jet ink sets available from EPSON.

HP5000 P™ is a high quality pigment ink-jet ink set available from HEWLETT-PACKARD.

Agfa Sherpa™ is a high quality pigment ink-jet ink set from AGFA.

Sty is an abbreviation for styrene available from ACROS.

MAA is an abbreviation for Methacrylic acid from ACROS.

BuMA is an abbreviation for n-Butyl methacrylate from ACROS. MPEG350MA is an abbreviation for methoxypolyethyleneglycol 350 methacrylate from Cognis Performance Chemicals under the tradename of Bisomer™ MPEG 350MA.

EHA is an abbreviation for 2-ethyl hexyl acrylate from ACROS.

EA is an abbreviation for ethyl acrylate from ACROS.

MPEG550MA is an abbreviation for methoxypolyethyleneglycol 350 methacrylate from SARTOMER Co. under the tradename of Sartomer™ CD550.

ETEGMA is an abbreviation for (ethyltriethyleneglycol)methacrylate from Röhm GmbH & Co. KG.

Bn(M)A is an abbreviation for benzyl (meth)acrylate from ALDRICH.

## Measurement methods

1. Spectral Separation Factor SSF

A spectrophotometric measurement of the UV-VIS-NIR absorption spectrum of the diluted ink was performed in transmission-mode with a double beam-spectrophotometer using the settings of Table 1. The measurement used quartz cells with a path length of 10 mm and water was chosen as a blank.

**Table 1**

| Mode | Absorbance |
|---|---|
| Wavelength range | 240-1100 nm |
| Slit width | 3.0 nm |
| Scan interval | 1.0 nm |
| Detector | photo-multiplier(UV-VIS) PbS-detektor (NIR |

The ink was diluted to have a pigment concentration of 0.002% if the absorbance maximum was between 400 and 500 nm or between 600 and 700 nm to have a pigment concentration of 0.005% if the absorbance maximum was between 500 and 600 nm.

The spectral separation factor (SSF) of the ink was calculated, using the data of the recorded spectrum. The maximum absorbance was compared to the absorbance at a reference wavelength. The choice of this reference wavelength was dependent on the pigment used:

- if the colour ink had a maximum absorbance $A_{max}$ between 400 and 500 nm then the absorbance $A_{ref}$ was determined at a reference wavelength of 600 nm,

- If the colour ink had a maximum absorbance $A_{max}$ between 500 and 600 nm then the absorbance $A_{ref}$ was determined at a reference wavelength of 650 nm,
- If the colour ink had a maximum absorbance $A_{max}$ between 600 and 700 nm then the absorbance $A_{ref}$ was determined at a reference wavelength of 830 nm.

The spectral separation factor was calculated as the ratio of the maximum absorbance $A_{max}$ over the absorbance $A_{ref}$ at the reference wavelength.

$$SSF = \frac{A_{max}}{A_{ref}}$$

2. Colour gamut measurement method

This method measures the colour gamut delivered by an ink set in terms of number of colours that can be printed, based upon an ImageXpert test target printed with an Agfa Sherpa™ 43 printer. The full density patches of cyan, magenta, yellow, black, green, red and blue, together with the unprinted paper whiteness are measured with a Gretag™ SPM50 spectrophotometer in CieL*a*b* colour space. From these values a simplified calculation of the potential volume of the colour gamut was performed with following assumptions:

1. straight connections between the L*a*b*-values of the colour patches
2. no paper-ink interactions (dot gain)
3. no ink-ink interactions

This delivers a volume of a triangulated colour gamut (relative whitepoint, true blackpoint). This value is very well suited for a relative comparison between two or more ink sets.

3. Accelerated light-fastness test

This light fading test simulates the indoor office fading according to the ISO/FDIS 18909:2003(E) standard method. The apparatus used in the test was a CI3000+ wheaterometer from Atlas with window glass filtered Xe-arc light.
Light conditions: black standard temperature of 50°C, irradiance of 50 W/m2 (300 - 400 nm) and light intensity of 96 klux. Chamber climate was maintained at 30°C, 50 %RH and air flow was controlled such that Black panel temperature in the sample plane did not exceed 50°C.
The total exposure time covered 80 hours and was applied in cycles of 16 hours of light exposure and 8 hours in a dark room. The total exposure therefore accumulated to 96 klux multiplied with 80 hours or 7680 klux.
Prints were made with an Agfa Sherpa™ printer on Agfajet™ UIPP Glossy 170g from AGFA. Test patches of Cyan (C), Magenta (M) and Yellow (Y) at density 1.00 were printed.
The test prints were dried for 48 hours prior to the light-fading test. Directly before starting the light fading test and after completion of the light fading test, the L*a*b* readings of the test patches were collected. In order to quantify the light stability, colour differences in terms of Delta E94 (CIE94) were determined.
To obtain a life time prediction from the accelerated test, 1 day indoor exposure was considered to be equal to 450 lux/hour during 12 hours window glass filtered Xe-arc. Assuming reciprocity behaviour, the 80 hours exposure at a 96 klux dose results in a prediction of 3.9 years lifetime for the aforementioned indoor conditions.

4. Average particle size

The average particle size of pigment particles in a pigment dispersion was determined by photon correlation spectroscopy at a wavelength of 632 nm on a tenfold-diluted sample of a pigment dispersion. The particle size analyzer used was a Brookhaven BI90plus available from Brookhaven Instruments Corporation.

5. Polymer analysis

All polymers have been characterized with gel permeation chromatography (GPC) and nuclear magnetic resonance spectroscopy (NMR). Random or block copolymers were analyzed with NMR by dissolving them in a deuterated solvent. For $^1$H-NMR $\pm$ 20 mg polymer was dissolved in 0.8 mL $CDCl_3$ or DMSO-d6 or acetonitrile-d3 or $D_2O$ (with or without NaOD addition). Spectra were recorded on a Varian Inova 400 MHz instrument equipped with an ID-probe.

For $^{13}$C-NMR $\pm$ 200 mg polymer was dissolved in 0.8 mL CDCl$_3$ or DMSO-d6 or acetonitrile-d3 or D$_2$O (with or without NaOD addition). Spectra were recorded on a Varian Gemini2000 300 MHz equipped with a SW-probe.

M$_n$, M$_w$, M$_z$ and polydispersity (pd) values were measured using gel permeation chromatography. For polymers dissolvable in organic solvents PL-mixed B columns (Polymer Laboratories Ltd) were used with either THF or THF+5% acetic acid as mobile phase using polystyrene with known molecular weights as calibration standards. These polymers were dissolved in the mobile phase at a concentration of 1 mg/mL. For polymers dissolvable in water PL Aquagel OH-60, OH-50, OH-40 and/or OH-30 (Polymer Laboratories Ltd) column combinations were used depending on the molecular weight region of the polymers under investigation. As mobile phase water/methanol mixtures adjusted to pH 9.2 with e.g. disodiumhydrogen phosphate were used with or without the addition of neutral salts e.g. sodium nitrate. As calibration standards polyacrylic acids with known molecular weights were used. The polymers were dissolved in either water or water made basic with ammonium hydroxide at a concentration of 1 mg/mL. Refractive index detection was used.

Some examples are now given to illustrate the calculation of the composition of the (block)copolymers:

Determination of the average composition of a random (= statistical) copolymer P(MAA-c-EHA):

Determine Mn of copolymer with GPC => Mn = 5000

Determine molar percentage of each monomer type by NMR => 45 mol% MAA and 55 mol% EHA

$$(0.45 \times M_{MAA}) + (0.55 \times M_{EHA}) = 140.09$$

5000 / 140.09 = total number of monomeric units in average polymer chain = 36

Average number of MAA units = 0.45 x (5000/140.09) = 16 units

Average number of EHA units = 0.55 x (5000/140.09) = 20 units

Thus, the average composition is P(MAA$_{16}$-c-EHA$_{20}$).

Determination of the average composition of AB block copolymer P(AA-b-BnA):

Block copolymer was prepared via ATRP. First a PtBA macroinitiator was prepared: Mn of this macroinitiator (based on NMR) is 6600 g/mol. Thus, the block length is 6600/M$_{tBA}$= 51 tBA units. Subsequently, the second block is prepared using BnA. Applying NMR the molar ratio between the two monomer types can be determined: 65/35 (tBA/BnA). Thus, the average composition of the block copolymer is P(tBA$_{51}$-b-BnA$_{27}$). After hydrolysis of the tBA units the final composition of the fully unprotected block copolymer is P(AA$_{51}$-b-BnA$_{27}$).

### EXAMPLE 1

In this example commercially available ink-jet ink sets capable of delivering top quality images (photograde quality) were analyzed by determining the spectral separation factor of the yellow, magenta and cyan inks present in the ink set.

**Table 2**

| Ink-jet ink set | Ink-jet Ink | $\lambda_{max}$ | A$_{max}$ | $\lambda_{ref}$ | A$_{ref}$ | SSF |
|---|---|---|---|---|---|---|
| COMP-1 | Epson 2000P™ yellow | 410 | 1,009 | 600 | 0,006 | 168 |
| | Epson 2000P™ magenta | 561 | 0,698 | 650 | 0,022 | 32 |
| | Epson 2000P™ cyan | 614 | 1,085 | 830 | 0,018 | 60 |
| COMP-2 | Epson 7600P™ yellow | 428 | 1,295 | 600 | 0,019 | 68 |
| | Epson 7600P™ magenta | 560 | 1,012 | 650 | 0,041 | 25 |
| | Epson 7600P™ cyan | 613 | 0,846 | 830 | 0,015 | 56 |
| COMP-3 | HP5000 P™ C4943A yellow | 410 | 1,145 | 600 | 0,011 | 104 |
| | HP5000 P™ C4942A magenta | 561 | 0,653 | 650 | 0,009 | 73 |
| | HP5000 P™ C4941A cyan | 612 | 1,014 | 830 | 0,015 | 68 |
| COMP-4 | Agfa Sherpa™ 43 P yellow | 438 | 0,951 | 600 | 0,032 | 30 |
| | Agfa Sherpa™ 43 P magenta | 563 | 0,264 | 650 | 0,009 | 29 |
| | Agfa Sherpa™ 43 P cyan | 616 | 0,397 | 830 | 0,006 | 66 |

Table continued

| Ink-jet ink set | Ink-jet Ink | $\lambda_{max}$ | $A_{max}$ | $\lambda_{ref}$ | $A_{ref}$ | SSF |
|---|---|---|---|---|---|---|
| COMP-5 | Epson R800™ Yellow T0544 | 439 | 1,406 | 600 | 0,037 | 38 |
| | Epson R800™ Magenta T0543 | 555 | 1,068 | 650 | 0,022 | 49 |
| | Epson R800™ Cyan T0542 | 610 | 1,528 | 830 | 0,017 | 90 |

From Table 2, it should be clear that, although occasionally one or two inks may have a spectral separation factor SSF larger than 70, that none of the high quality ink-jet ink sets have three inks C, M and Y with a SSF larger than 70.

EXAMPLE 2

This example illustrates the possibility of ink-jet inks with a SSF larger than 70 and still having an average particle size larger than 100 nm.

Preparation of the pigment dispersion

The components were mixed in a 60 mL flask according to the general formulation of Table 3.

Table 3

| Component | Weight (g) | Concentration (%) |
|---|---|---|
| Ink-jet Magenta™ | 1 | 5 |
| Polymer (5% solution) | 12 | 3 |
| Water | 7 | --- |

The dispersions DISP-1 to DISP-5 were prepared with the polymers according to Table 4. The polymer is applied as a 5% aqueous solution. The moleculair weight Mn and the composition of the statistical polymers is also given by Table 4 in the last 2 columns, for example, P(Sty-MAA-BuMA-MPEG350MA) has Mn of 16099 and consists of 21 mol% of Sty, 39 mol% MAA, 29 mol% of BuMA and 11 mol% of MPEG350MA.
Table 4

| Dispersion | Polymeric dispersant | Mn | Polymer composition (mol %) |
|---|---|---|---|
| DISP-1 | P(Sty-MAA-BuMA-MPEG350MA) | 16099 | 21 / 39 / 29 / 11 |
| DISP-2 | P(MPEG350MA-MAA-EHA) | 14407 | 13/35/52 |
| DISP-3 | P(MAA-MPEG550MA-Sty-BuMA) | 21148 | 31 / 14 / 24 / 31 |
| DISP-4 | P(MAA-ETEGMA-Sty-BuMA) | 14957 | 31 / 13 / 23 / 33 |
| DISP-5 | P(MAA-MPEG350MA-BnMA-EHA) | 9087 | 38 / 11 / 24 / 27 |

Each mixture was subjected to a wet dispersion treatment using a roller mill and 0.4 mm yttrium stabilized zirconium beads YTZ™ Grinding Media (available from TOSOH Corp.). The flask is filled to half its volume with the grinding beads and put onto the roller mill. The speed is set at 150 rotations per minute for three days. After milling, the dispersion is separated from the beads using a filter cloth.

Preparation of the ink

The pigment dispersion served as the basis for the preparation of the ink. The ink-jet inks were prepared by mixing the components according to the general formulation of Table 5.
**Table 5**

| Component | Weight(g) |
|---|---|
| Pigment dispersion | 71.0 |
| Propylene glycol | 21.0 |
| Glycerol | 7.0 |
| Surfynol™ 104H | 0.1 |
| Acticide™ BW10 | 0.4 |
| Triethanol amine | 0.5 |

The pigment dispersions according to Table 6 were used to prepare ink-jet inks with a pigment concentration of 3.55%.

**Table 6**

| Ink-jet Ink | Pigment dispersion used |
|---|---|
| INK-1 | DISP-1 |
| INK-2 | DISP-2 |
| INK-3 | DISP-3 |
| INK-4 | DISP-4 |
| INK-5 | DISP-5 |

Each mixture according to Table 5 and Table 6 was stirred for 10 minutes and filtered afterwards. The filtration is performed in two steps. First, the ink mixture is filtered using a PlastipakTM syringe with a microfiber disposable filtercapsule having a cap with a 1μm pore diameter and GF/B microfiber (available from WHATMAN Inc.). Afterwards the same procedure is repeated on the filtrate. After the second filtration the ink is ready for evaluation. If filtration is difficult with 1 μm filtercaps, 1.6 μm filtercaps are used. If there is no improvement when using these caps, the ink is left unfiltered and evaluated as such.

Evaluation

The spectral separation factor SSF and the average particle size were determined for the ink-jet inks INK-1 to INK-5.

**Table 7**

| Ink | SSF | Particle size (nm) |
|---|---|---|
| INK-1 | 84 | 122 |
| INK-2 | 92 | 132 |
| INK-3 | 94 | 130 |
| INK-4 | 89 | 126 |
| INK-5 | 91 | 115 |

The results in Table 7 show that although the average particle size of the C.I. Pigment Red 122 in the inks INK-1 tot INK-5 was larger than the 100nm, a SSF of higher than 70 was reached.

EXAMPLE 3

This example illustrates that the invention pigment ink set combines the light-fastness of a pigment ink-jet ink set with the colour gamut (high SSF) of a dye-based ink-jet ink set.

Ink sets

The comparative ink-jet ink set COMP-4 of Example 1 was used as typical pigment ink-jet ink set.
A comparative ink-jet ink set COMP-6 consisting of a yellow, magenta and cyan dye-based ink was prepared according to Table 8 expressed in weight % based on the total weight of the ink.
**Table 8**

| Component | CYAN (wt%) | MAGENTA (Wt%) | YELLOW (Wt%) |
|---|---|---|---|
| Duasyn Direct Turquoise Blue™ FRL-SF Liq. | 3.530 | - | 0.004 |
| Duasyn Briljant Red™ F3b-SF Liq. | - | 3.000 | - |
| Duasyn Yellow™ 3G-SF Liq. | - | - | 2.000 |
| Polypropylene glycol | 21.000 | 21.000 | 21.000 |
| Glycerol | 7.000 | 7.000 | 7.000 |
| Surfynol™ 104H | 0.090 | 0.090 | 0.090 |
| 1,2-hexanediol | 4.000 | 4.000 | 4.000 |
| Proxel™ | 0.800 | 0.800 | 0.800 |
| Water | to complete 100.000 wt% | | |

The inventive ink-jet ink set INV-1 was prepared according to Table 9. Each of the pigment inks of INV-1 was prepared in two steps. In a first step, a concentrated aqueous pigment dispersion was made in the same way as described in Example 2, comprising pigment, polymeric dispersant and water. The polymeric dispersant used was a copolymer of acrylate-acrylic acid. In a second step the other components were added and mixed with the pigment dispersion in the same way as described in Example 2. The final composition of the pigment ink-jet inks of the inventive ink-jet ink set INV-1 is given in Table 9 expressed in weight % based on the total weight of the ink.
**Table 9**

| Component | Cyan ink (Wt%) | Magenta ink (Wt%) | Yellow ink (wt%) |
|---|---|---|---|
| Sunfast™ Blue | 1.9 | - | - |
| Ink-jet Magenta™ | - | 2.7 | - |
| Hansa Brilliant Yellow™ | - | - | 4.0 |
| Polymeric dispersant | 1.5 | 2.2 | 3.2 |
| 1,2-hexanediol | 5.0 | 5.0 | 5.0 |
| Glycerol | 20.0 | 20.0 | 20.0 |
| Water | to complete 100.0 wt% | | |

For each of the pigment inks, the viscosity and surface tension was measured and these are shown in Table 10.

**Table 10**

| Ink of INV-1 | Viscosity | Surface tension |
|---|---|---|
| Cyan ink | 2.8 mPa.s | 31.8 mN/m |
| Magenta ink | 3.4 mPa.s | 32.6 mN/m |
| Yellow ink | 3.6 mPa.s | 31.5 mN/m |

Results

The comparative ink-jet ink sets COMP-4 and COMP-6 and the inventive ink-jet ink set INV-1 were compared by using the accelerated light-fastness test. The Delta E94 values for Yellow(Y), Magenta(M) and Cyan(C) patches printed at optical density 1.00 are given by Table 11. The colour gamut was determined with the colour gamut measurement method.

**Table 11**

| Ink-jet ink set | Ink-jet Ink | SSF | Measured colour gamut | Light fading | |
| --- | --- | --- | --- | --- | --- |
| | | | | Delta E94 value | Average Delta E94 value |
| COMP-4 | Sherpa™ 43 P (Y) | 30 | 561800 | 0.9 | 1.0 |
| | Sherpa™ 43 P (M) | 29 | | 1.3 | |
| | Sherpa™ 43 P (C) | 66 | | 0.9 | |
| COMP-6 | Dye ink (Y) | ≫70 | 582532 | 3.6 | 5.7 |
| | Dye ink (M) | ≫70 | | 11.8 | |
| | Dye ink (C) | ≫70 | | 1.7 | |
| INV-1 | Pigment ink (Y) | 128 | 643313 | 0.2 | 0.8 |
| | Pigment ink (M) | 75 | | 1.5 | |
| | Pigment ink (C) | 73 | | 0.7 | |

Table 11 shows that the inventive pigment ink-jet ink set INV-1 combines a large colour gamut with a high light fastness.

EXAMPLE 4

This example illustrates the relation between the colour gamut and the SSF of ink-jet ink sets.

Ink sets

Polymeric dispersants were prepared according to Table 12 using standard methods of synthesis. The polymeric dispersants POL-1 and POL-3 to POL-8 were statistical copolymers (noted as P(A-B) wherein A and B represent monomers). The polymeric dispersant POL-2 was a block copolymer (noted as PA-b-PB wherein A and B represent monomers). The monomer ratio shows, in the same sequence, the mol% of monomers present in the polymer.

**Table 12**

| Polymeric Dispersant | Polymer | Mn | Polymer composition (mol%) |
| --- | --- | --- | --- |
| POL-1 | P(Sty - SSA) | 5886 | 50 - 50 |
| POL-2 | P(AA-b-BuA)* | 6355 | 83 - 17 |
| POL-3 | P(AA-BuA)* | 2655 | 68 - 32 |
| POL-4 | P(AA-EHA)* | 12789 | 50 - 50 |
| POL-5 | P(MAA-Sty-EA) | 34851 | 20 - 20 - 60 |
| POL-6 | P(Sty-b-AA)* | 4140 | 40 - 60 |
| POL-7 | P(MSty-b-AA)* | 12365 | 13 - 87 |
| POL-8 | P(AA-EHA)* | 13535 | 58 - 42 |

[0200]   * Analytical results (Mn, based on GPC, and polymer composition, based on NMR) of these polymers are the results of the tBA precursor copolymer.

The inventive ink-jet ink sets INV-2 and INV-3 and the comparative ink-jet ink sets COMP-6 to COMP-7 were prepared in the same manner as for Example 3 according to Table 9 except that the polymeric dispersants were used according to Table 13.

**Table 13**

| Ink-jet ink set | Yellow ink | Magenta ink | Cyan ink |
|---|---|---|---|
| INV-2 | POL-1 | POL-2 | POL-3 |
| INV-3 | POL-4 | POL-2 | POL-3 |
| COMP-6 | POL-5 | POL-2 | POL-3 |
| COMP-7 | POL-6 | POL-7 | POL-8 |
| COMP-8 | POL-5 | POL-5 | POL-5 |

Results

The colour gamut was calculated for the inventive ink-jet ink sets INV-2 and INV-3 and the comparative ink-jet ink sets COMP-6 to COMP-7. The colour gamut calculation method was used to determine the colour gamut of the comparative ink-jet ink sets COMP-1 to COMP-5 of EXAMPLE 1.

**Table 14**

| Ink-jet ink set | Ink-jet ink | SSF | Calculated Colour gamut |
|---|---|---|---|
| COMP-1 | Epson 2000PTM yellow | 168 | 520253 |
|  | Epson 2000PTM magenta | 32 |  |
|  | Epson 2000PTM cyan | 60 |  |
| COMP-2 | Epson 7600PTM yellow | 68 | 449717 |
|  | Epson 7600PTM magenta | 25 |  |
|  | Epson 7600PTM cyan | 56 |  |
| COMP-3 | HP5000 PTM C4943A yellow | 104 | 498348 |
|  | HP5000 PTM C4942A magenta | 73 |  |
|  | HP5000 PTM C4941A cyan | 68 |  |
| COMP-4 | Agfa SherpaTM 43 P yellow | 30 | 308899 |
|  | Agfa SherpaTM 43 P magenta | 29 |  |
|  | Agfa SherpaTM 43 P cyan | 66 |  |
| COMP-5 | Epson R800TM Yellow T0544 | 38 | 442211 |
|  | Epson R800TM Magenta T0543 | 49 |  |
|  | Epson R800TM Cyan T0542 | 90 |  |
| COMP-6 | Yellow ink | 13 | 530028 |
|  | Magenta ink | 91 |  |
|  | Cyan ink | 81 |  |
| COMP-7 | Yellow ink | 67 | 509008 |
|  | Magenta ink | 45 |  |
|  | Cyan ink | 36 |  |

Table continued

| Ink-jet ink set | Ink-jet ink | SSF | Calculated Colour gamut |
|---|---|---|---|
| COMP-8 | Yellow ink | 13 | 278259 |
| | Magenta ink | 12 | |
| | Cyan ink | 11 | |
| INV-2 | Yellow ink | >340 | 787643 |
| | Magenta ink | 91 | |
| | Cyan ink | 81 | |
| INV-3 | Yellow ink | 157 | 694862 |
| | Magenta ink | 91 | |
| | Cyan ink | 81 | |

From Table 14 it is clear that only the inventive ink-jet ink sets INV-2 and INV-3 exhibited a very high colour gamut since all spectral separation factor SSF were larger than 70. Even substitution of only the yellow ink of the inventive ink-jet ink sets INV-2 and INV-3 by a yellow ink having a SSF smaller than 70 reduces the colour gamut to a large extent as illustrated by the comparative ink-jet ink set COMP-6. This is also illustrated for a cyan ink by the comparative ink-jet ink set COMP-3.

EXAMPLE 5

This example illustrates the use of the SSF factor to determine the required milling time for C.I. Pigment Blue 15:3 to prepare cyan ink for ink-jet ink set exhibiting a high colour gamut.

Preparation of the pigmented ink-jet ink

A pigment dispersion was prepared according to the formulation of Table 15.

**Table 15**

| Component | Weight (g) |
|---|---|
| Sunfast™ Blue | 150.0 |
| Edaplan™ 482 | 175.4 |
| Proxel™ Ultra 5 | 4.0 |
| Water | 670.6 |

4.0 g of a 5.5 wt% solution of the biocide Proxel™ Ultra 5 in water and 175.4 g of a 85.5 wt% solution of Edaplan™ 482 in water were mixed in 670.6 g of water. Under stirring with a DISPERLUX from ATP ENGINEERING, 150.0g of the pigment Sunfast™ Blue was added to obtain a 30% solids mixture. This mixture was milled with a DYNOMILL KDL from BACHOVEN using 0.3 mm yttrium stabilized zirconium beads YTZ™ Grinding Media (available from TOSOH Corp.) with 50% of the volume effectively filled with beads. The dispersion was circulated at a feeding rate of 200 mL/min and the rotation speed of 15m/s. During milling the dispersion was cooled to 25°C.

Samples were taken after different residence times (i.e. the time that the pigment dispersion remained in the mill) to determine the SSF factor. The calculated SSF and measured average particle sizes are listed in Table 16.

**Table 16**

| Residence time (min) | Average Particle Size | SSF |
|---|---|---|
| 18 | 131 nm | 36 |
| 36 | 121 nm | 52 |
| 54 | 113 nm | 64 |

Table continued

| Residence time (min) | Average Particle Size | SSF |
|---|---|---|
| 72 | 107 nm | 73 |

An SSF higher than 70 was obtained after 72 minutes of residence time. The cyan ink was suitable for preparing ink-jet ink sets with excellent colour gamut.

Having described in detail preferred embodiments of the current invention, it will now be apparent to those skilled in the art that numerous modifications can be made therein without departing from the scope of the invention as defined in the appending claims.

**Claims**

1.   A method for preparing an ink-jet ink set comprising the steps of:

(a) preparing a first colour ink by mixing a polymeric dispersant and a pigment having a maximum absorbance $A_{max}$ between 400 and 500 nm and an absorbance $A_{ref}$ at a reference wavelength of 600 nm;
(b) preparing a second colour ink by mixing a polymeric dispersant and a pigment having a maximum absorbance $A_{max}$ between 500 and 600 nm and an absorbance $A_{ref}$ at a reference wavelength of 650 nm;
(c) preparing a third colour ink by mixing a polymeric dispersant and a pigment having a maximum absorbance $A_{max}$ between 600 and 700 nm and an absorbance $A_{ref}$ at a reference wavelength of 830 nm;

**characterized in that** each colour ink is milled until a spectral separation factor SSF larger than 70 with SSF = $A_{max}$ / $A_{ref}$ is measured.

2.   A method for preparing an ink-jet ink set according to claim 1 comprising the steps of:

(a) preparing a first colour ink by mixing a polymeric dispersant and a pigment having a maximum absorbance $A_{max}$ between 400 and 500 nm and an absorbance $A_{ref}$ at a reference wavelength of 600 nm;
(b) preparing a second colour ink by mixing a polymeric dispersant and a pigment having a maximum absorbance $A_{max}$ between 500 and 600 nm and an absorbance $A_{ref}$ at a reference wavelength of 650 nm;
(c) preparing a third colour ink by mixing a polymeric dispersant and a pigment having a maximum absorbance $A_{max}$ between 600 and 700 nm and an absorbance $A_{ref}$ at a reference wavelength of 830 nm;
(d) milling the mixtures of polymeric dispersants and pigments of each colour ink;
(e) measuring the absorbances at $A_{max}$ and at $A_{ref}$ and calculating the spectral separation factor SSF for each colour ink;
(f) repeating steps (d)-(e) at least once for the colour ink(s) having a spectral separation factor SSF smaller or equal than 70.

3.   A method according to claim 1 or 2, wherein said first colour ink has a spectral separation factor SSF larger than 120.

4.   A method according to any of claims 1 to 3, wherein at least one of the colour inks is a water based ink-jet ink.

5.   A method according to any of claims 1 to 4, wherein at least one of the colour inks is a radiation curable ink-jet ink.

6.   A method according to any of claims 1 to 5, wherein said ink-jet ink set comprises a black ink.

7.   A method according to any of claims 1 to 6, wherein said ink-jet ink set comprises an azo pigment as a yellow pigment, a quinacridone as a magenta pigment and a Cu-phthalocyanine pigment as a cyan pigment.

8.   A method according to claim 7, wherein said ink-jet ink set comprises an azoacetoacetanilide pigment as a yellow pigment, a quinacridone as a magenta pigment and a Cu-phthalocyanine pigment as a cyan pigment.

9.   A method according to claim 8, wherein said ink-jet ink set comprises the pigments C.I. Pigment Yellow 74, C.I. Pigment Red 122 and a β-Cu phthalocyanine pigment.

**10.** A method according to any of claims 1 to 9, wherein said ink-jet ink set comprises an ink wherein the pigment has an average particle size larger than 100 nm.

**11.** A method according to claim 10, wherein two or more colour inks comprise pigments with an average particle size larger than 100 nm.

**12.** A method according to any of claims 1 to 11, wherein said ink-jet ink set is a multi-density ink-jet ink set.

**13.** A method according to any of claims 1 to 12, wherein the average size of the beads used for milling is between 0.2 and 0.5 mm.

**14.** A method according to any of claims 1 to 13, wherein at least 50 volume% of the mill grind consists of beads.

**15.** An ink-jet ink set obtainable by a method according to any of claims 1 to 12.

**European Patent
Office**

**EUROPEAN SEARCH REPORT**

Application Number

EP 05 11 0852

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| P,X | EP 1 493 784 A (ILFORD IMAGING UK LIMITED) 5 January 2005 (2005-01-05) * the whole document * | 1-15 | C09D11/00 |
| X | US 2004/237838 A1 (YATAKE MASAHIRO ET AL) 2 December 2004 (2004-12-02) * the whole document * | 1-15 | |
| X | GB 2 401 872 A (* ILFORD IMAGING UK LIMITED) 24 November 2004 (2004-11-24) * the whole document * | 1-15 | |
| X | PATENT ABSTRACTS OF JAPAN vol. 2003, no. 12, 5 December 2003 (2003-12-05) & JP 2004 285216 A (KONICA MINOLTA HOLDINGS INC), 14 October 2004 (2004-10-14) * the whole document * | 1-15 | |
| X | WO 2004/003090 A (DU PONT [US]; PEARLSTINE KATHRYN A [US]; JENKINS LAURI L [US]) 8 January 2004 (2004-01-08) * the whole document * | 1-15 | TECHNICAL FIELDS SEARCHED (IPC) C09D |
| X | PATENT ABSTRACTS OF JAPAN vol. 2003, no. 10, 8 October 2003 (2003-10-08) & JP 2003 176427 A (SEIKO EPSON CORP), 24 June 2003 (2003-06-24) * the whole document * | 1-15 | |
| X | WO 03/029007 A (E.I. DU PONT DE NEMOURS AND COMPANY; REDDING, MARTIN, E; LOCKE, JOHN,) 10 April 2003 (2003-04-10) * the whole document * | 1-15 | |

-/--

The present search report has been drawn up for all claims

| Place of search | Date of completion of the search | Examiner |
|---|---|---|
| Munich | 5 December 2005 | Glomm, B |

EPO FORM 1503 03.82 (P04C01)

**European Patent Office**

**EUROPEAN SEARCH REPORT**

Application Number

EP 05 11 0852

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/096085 A1 (GOTOH AKIHIKO ET AL) 25 July 2002 (2002-07-25) * the whole document * ----- | 1-15 | |
| X | EP 1 251 154 A (FUJI PHOTO FILM CO., LTD) 23 October 2002 (2002-10-23) * the whole document * ----- | 1-15 | |
| X | US 2002/043175 A1 (WALKER NICHOLAS ALEXANDER ET AL) 18 April 2002 (2002-04-18) * the whole document * ----- | 1-15 | |
| | | | TECHNICAL FIELDS SEARCHED (IPC) |

The present search report has been drawn up for all claims

| Place of search | Date of completion of the search | Examiner |
|---|---|---|
| Munich | 5 December 2005 | Glomm, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 05 11 0852

This annex lists the patent family members relating to the patent documents cited in the above-mentioned European search report.
The members are as contained in the European Patent Office EDP file on
The European Patent Office is in no way liable for these particulars which are merely given for the purpose of information.

05-12-2005

| Patent document cited in search report | | | Publication date | Patent family member(s) | | Publication date |
|---|---|---|---|---|---|---|
| EP 1493784 | A | | 05-01-2005 | US | 2005004263 A1 | 06-01-2005 |
| US 2004237838 | A1 | | 02-12-2004 | NONE | | |
| GB 2401872 | A | | 24-11-2004 | NONE | | |
| JP 2004285216 | A | | 14-10-2004 | NONE | | |
| WO 2004003090 | A | | 08-01-2004 | AU 2003247765 A1 | | 19-01-2004 |
| | | | | EP 1517968 A1 | | 30-03-2005 |
| | | | | JP 2005532437 T | | 27-10-2005 |
| JP 2003176427 | A | | 24-06-2003 | NONE | | |
| WO 03029007 | A | | 10-04-2003 | EP 1433308 A2 | | 30-06-2004 |
| | | | | JP 2005504655 T | | 17-02-2005 |
| US 2002096085 | A1 | | 25-07-2002 | NONE | | |
| EP 1251154 | A | | 23-10-2002 | JP 2002309137 A | | 23-10-2002 |
| | | | | US 2003097959 A1 | | 29-05-2003 |
| US 2002043175 | A1 | | 18-04-2002 | GB 2367299 A | | 03-04-2002 |

EPO FORM P0459